# EUROPEAN PATENT SPECIFICATION

(11) **EP 4 576 786 B1**
(45) Date of publication and mention of the grant of the patent: **27.05.2026**
(21) Application number: 24212662.1
(22) Date of filing: 13.11.2024
(51) Int. Cl.: H04N 21/2343, H04N 19/167

(54) **TIME-LIMIT INTERPOLATION**
INTERPOLATION MIT ZEITBEGRENZUNG
INTERPOLATION DE LIMITE TEMPORELLE

(30) Priority: 20.12.2023 GB 202319634
(43) Date of publication of application: 25.06.2025
(73) Proprietor: Sony Interactive Entertainment Europe Limited, London W1F 7LP (GB); Sony Interactive Entertainment LLC, San Mateo, CA 94404 (US)
(72) Inventor: GREEN, Lawrence Martin, c/o Sony Interactive Entertainment Europe Limited, London, W1F 7LP (GB); HUME, Oliver George, c/o Sony Interactive Entertainment Europe Limited, London, W1F 7LP (GB); COLES, David, c/o Sony Interactive Entertainment LLC, 2207 Bridgepoint Parkway, CA 94404 (US); MOTILLA, Daniel Montero, c/o Sony Interactive Entertainment Europe Limited, London, W1F 7LP (GB)
(74) Representative: Fish & Richardson P.C.

(56) References cited:
- WO-A1-2020/055684
- US-A1- 2017 180 758
- GHABASHNEH EHAB ET AL: "Dragonfly: Higher Perceptual Quality For Continuous 360� Video Playback", PROCEEDINGS OF THE ACM SIGCOMM 2023 CONFERENCE, ACMPUB27, NEW YORK, NY, USA, 10 September 2023 (2023-09-10), pages 516 - 532, XP059428304, ISBN: 979-8-4007-0256-3, DOI: 10.1145/3603269.3604876

## Description

### FIELD

The present invention relates to methods and systems for tile-based encoding in cloud gaming.

### BACKGROUND

A current area of rapidly growing technology is the field of cloud gaming, also known as game streaming. In cloud gaming, the game is processed and rendered on remote servers in data centres, and the video output is streamed to a player's device over the internet. The player's device then decodes and displays the video stream.

In cloud gaming, tiles in an image frame may be ordered when sending the frame. The video frames are often divided into smaller tiles, which can be efficiently encoded, transmitted, and rendered on a player's device. The player's device then reassembles these tiles to form the final image.

The first step in the process of ordering tiles in an image frame is to divide the image frame into smaller tiles. The number and size of the tiles depend on various factors, such as the device's screen resolution, network conditions, and the available computational resources in the cloud server. After dividing the image into tiles, each tile is independently encoded. The most common encoding formats for cloud gaming are H.264 or H.265 (HEVC). These formats allow efficient compression and transmission of video data. Once the tiles are encoded, they are sent over the network to the player's device. The transmission can be done using adaptive bitrate streaming protocols, such as HTTP Live Streaming (HLS) or Dynamic Adaptive Streaming over HTTP (DASH), which adjust the video quality based on the available bandwidth. On the player's device, the received tiles are decoded and then arranged in the correct order to reconstruct the final image. The order is usually determined by the coordinates assigned to each tile during the encoding process. The fully reconstructed image frame is then displayed on the player's screen.

Frame interpolation in video streaming is known. Often tile-based encoding schemes are used. It is known to only send the tiles that have changed, to reduce the amount of data sent, then fill in the gaps from the previous frame. This often does not use encoders in the most efficient way. There can still be issues with latency.

US 2017/180758 A1 describes a tile concept that allows independent encoding and decoding of regions of video frames combined with changes in the way that the coded tiles are packetized and queued for transport. Thus, more important tile data is put in the network abstraction layer at the head of the queue while the less important data is inserted later in the queue. For a given link bandwidth/latency environment, the important data is transmitted first and the less important data can be discarded at the transmitter with less impact on the user perceived quality.

WO 2020/055684 A1 describes in-flight adaptive foveated rendering. The apparatus receives information indicative of a fovea region. Based on this information, the apparatus identifies high priority bins (which are equivalent to tiles) and low priority bins. The rendering time allotment for the frame is also determined based on an amount of time used to render the high priority bins and the low priority bins. In case the rendering time allotment for the frame will be exceeded, at least one of the low priority bins will be rendered at a lower quality than originally intended.

Aspects and embodiments were conceived with the foregoing in mind.

### SUMMARY

The scope of protection of the present invention is as defined in the appended claims. Any embodiments not falling within such scope should be construed as examples which do not describe parts of the invention.

The invention as claimed solves the problems associated with the prior art by setting a predetermined time and rendering tiles in a current frame in a rendering order using a priority list. The tiles are processed in order of priority. Any tiles which have not been rendered and transmitted to a receiver can be interpolated from available information.

Data transfer over the internet is therefore minimised and latency is reduced, ensuring smoother gameplay.

### DESCRIPTION

Embodiments of this disclosure will be described hereinafter, by way of example only, with reference to the accompanying drawings in which like reference signs relate to like elements and in which:
Figure 1 shows a simplified block diagram of a system that is used to preload game content onto a cloud game server according to an embodiment of this disclosure;
Figure 2 is a block diagram representing a transmitter device according to an embodiment of this disclosure;
Figure 3 illustrates a system for streaming a cloud video game to a receiver device according to an embodiment of this disclosure;
Figure 4 illustrates a computer-implemented method for rendering a plurality of tiles in a rendering order according to an embodiment of this disclosure; and
Figure 5 illustrates a computer-implemented method for interpolating each tile that has not been rendered from available information according to an embodiment of this disclosure.

### DETAILED DESCRIPTION

Embodiments of this disclosure are described in the following with reference to the accompanying drawings.

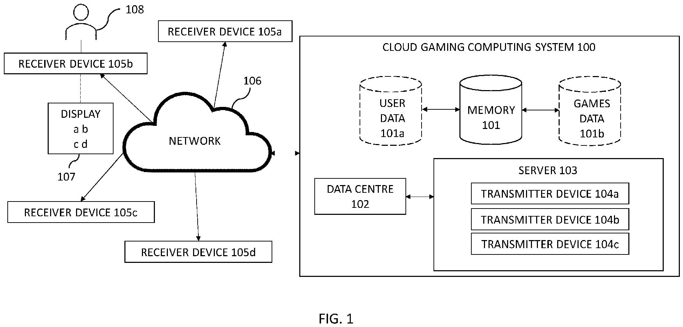

Referring to FIG. 1, an example system used to load game files for a game (which may also be referred to in the present disclosure as a cloud video game) available through a cloud gaming computing system 100 is shown. The system includes a plurality of receiver devices 105a-105d that are communicatively connected to the cloud gaming computing system 100 over a wired or wireless network 106, such as the internet.

A receiver device 105 may include, but is not limited to, a video game playing device (games console), a smart TV, a smartphone, laptop, personal computer (PC), etc. The receiver device 105 is configured to receive information such as video frames from the cloud gaming computing system 100, via the network 106. The receiver device 105 may also be referred to in the present disclosure as a client device or a computing device.

When a request to access the cloud gaming computing system 100 is received from a receiver device 105, the cloud gaming computing system 100 accesses user account information stored in a memory 101 (which may also be referred to in the present disclosure as a cloud storage), specifically in user data 101a, to identify a user 108 associated with the receiver device 105b through which the request is initiated. In some embodiments, the cloud gaming computing system 100 may also validate the identified user 108 in order to determine all the games the user is authorised to view/play. Following user account identification/validation, the cloud gaming computing system 100 accesses game titles information stored in memory 101, specifically in games data 101b, to identify the game titles that are available at the cloud gaming computing system 100 for the user 108 initiating the request. The receiver device 105b from where the request is initiated may or may not be registered with the cloud gaming computing system 100, when the request was initiated. If the user of the receiver device initiating the request is not a registered user, then the cloud gaming computing system 100 may identify the user as a new user and select the game titles (for e.g., a default set of game titles) that are appropriate for a new user. The identified game titles (a, b, c, d) are returned to the receiver device 105b for presenting on a display 107, as shown in FIG. 1A.

User interaction at one of the game titles (a, b, c, d) rendered on the receiver device 105b is detected and a signal is sent to the cloud gaming computing system 100. In response to the signal received from the receiver device 105b, the cloud gaming computing system 100 proactively determines a data centre where the game is being hosted and sends a signal to the identified data centre 102 to load the game associated with the game title for which the user interaction is detected. In some embodiments, more than one data centre may be hosting the game.

The identified data centre 102 selects a server 103 at the data centre 102 to initiate the game on the server 103. The server 103 includes a plurality of transmitter devices 104a-104c and the server determines which one of the plurality of transmitter devices 104a-104c to use to load the game.

Once the transmitter device 104b is identified, for example, the generic game-related code for the game is loaded onto the transmitter device 104b and a signal is returned to the receiver device 105b over the network 106 identifying the transmitter device 104b on which the game is initiated. The loaded game is thus made available to the user 108.

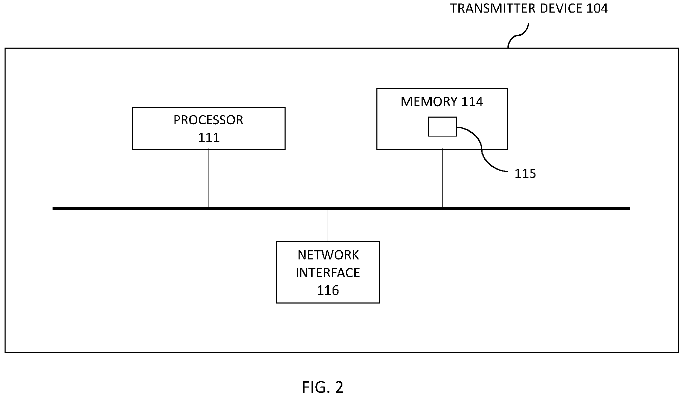

FIG.2 is a block diagram of one example implementation of a transmitter device 104 according to an embodiment of the present disclosure. The transmitter device 104 is associated with executable instructions 115 for causing the transmitter device 104 to perform one or more of the methodologies discussed herein. The transmitter device 104 may form part of the cloud gaming computing system 100. In alternative implementations, the transmitter device 104 may be connected (e.g., networked) to other machines in a Local Area Network (LAN), an intranet, an extranet, or the Internet. The transmitter device 104 may operate in the capacity of a server or a client machine in a client-server network environment, or as a peer machine in a peer-to-peer (or distributed) network environment. The transmitter device 104 may be any machine capable of executing a set of instructions (sequential or otherwise) that specify actions to be taken by that machine. Further, while only a single transmitter device is illustrated, the term "transmitter device" shall also be taken to include any collection of machines (e.g., computers) that individually or jointly execute a set (or multiple sets) of instructions to perform any one or more of the methodologies discussed herein.

The example transmitter device 104 includes a processor 111, and a memory 114 which includes a main memory (e.g., read-only memory (ROM), flash memory, dynamic random-access memory (DRAM) such as synchronous DRAM (SDRAM) or Rambus DRAM (RDRAM), etc.), a static memory (e.g., flash memory, static random-access memory (SRAM), etc.), and/or a secondary memory. The transmitter device 104 may further include a wired or wireless network interface 116.

Processor 111 represents one or more general-purpose processors such as a microprocessor, central processing unit, or the like. More particularly, the processor 111 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 111 may also be one or more special-purpose processing devices such as an application specific integrated circuit (ASIC), a field programmable gate array (FPGA), a digital signal processor (DSP), network processor, or the like. Processor 111 is configured to execute the processing logic (instructions 115) for performing the operations and steps discussed herein.

In an implementation, the modules, components and other features described herein can be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilising terms such as "providing", "calculating", "computing," "identifying", "detecting ", "establishing" , "training", "determining", "storing", "generating" ,"checking", "obtaining" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

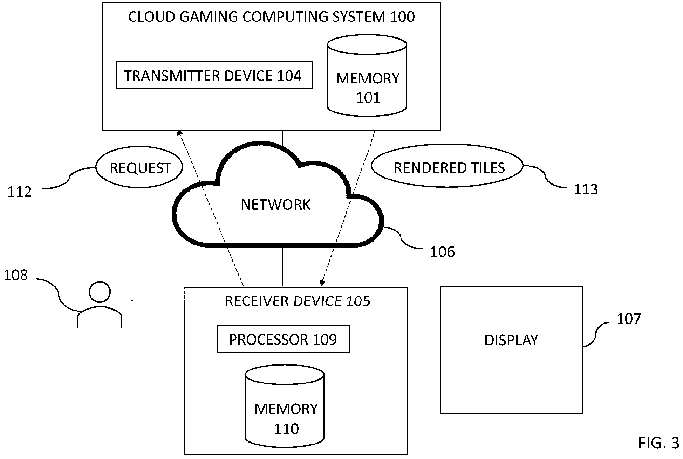

Referring to FIG. 3, an example system for transmitting rendered tiles to a receiver device 105 according to an embodiment of this disclosure is shown. The system includes a receiver device 105 communicatively connected to a cloud gaming computing system 100 through a network 106, such as the internet. A request 112 to initiate gameplay of a game may be transmitted from the receiver device 105 to the cloud gaming computing system 100 via the network 106.

The example system further comprises at least one display 107 (which may also be referred to in the present disclosure as a display device or display screen). The display 107 (e.g., a liquid crystal display (LCD) or a cathode ray tube (CRT)) is configured to receive and display a video game stream. It will be appreciated that in some implementations, the display 107 can be a head-mounted display. The receiver device 105 and display 107 are operably connected by a wired or wireless network or connection. In some embodiments, the display 107 is integral to the receiver device 105.

The receiver device 105 may include various other components, such as an alphanumeric input device (e.g., a keyboard or touchscreen), a cursor control device (e.g., a mouse or touchscreen), and/or an audio device (e.g., a speaker). The receiver device 105 comprises a processor 109 to execute various modules stored in a memory 110. Memory 110 includes a main memory (e.g., read-only memory (ROM), flash memory, dynamic random-access memory (DRAM) such as synchronous DRAM (SDRAM) or Rambus DRAM (RDRAM), etc.), a static memory (e.g., flash memory, static random-access memory (SRAM), etc.), and/or a secondary memory. The receiver device 105 further comprises a codec, or decoder comprising decoding logic. The decoding logic may include hardware, firmware, and/or software stored on the memory 110. Systems for decoding (and encoding) video streams are well known in the art and vary depending on the encoding scheme or format used. It will be appreciated that encoding a video can also be referred to as compressing a video, as this action reduces the amount of data required to be transmitted (or the file size).

Processor 109 represents one or more general-purpose processors such as a microprocessor, central processing unit, or the like. More particularly, the processor 109 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 109 may also be one or more special-purpose processing devices such as an application specific integrated circuit (ASIC), a field programmable gate array (FPGA), a digital signal processor (DSP), network processor, or the like. Processor 109 is configured to execute the processing logic for performing the operations and steps discussed herein.

The request 112, which is transmitted from the receiver device 105 over the network 106, is received at the cloud gaming computing system 100. The cloud gaming computing system 100 comprises at least one transmitter device 104 on which the games stored at the cloud gaming computing system 100 is executed.

The cloud gaming computing system 100 is configured to encode data, which includes video data, and generate a video game stream. Preferably, the video game stream includes a video stream and an audio stream. The video stream comprises a plurality of video frames, and each video frame is divided into a plurality of rendered tiles 113. The plurality of rendered tiles 113 may be encoded prior to transmission to the receiver device 105. The plurality of rendered tiles 113 are sent to the receiver device 105.

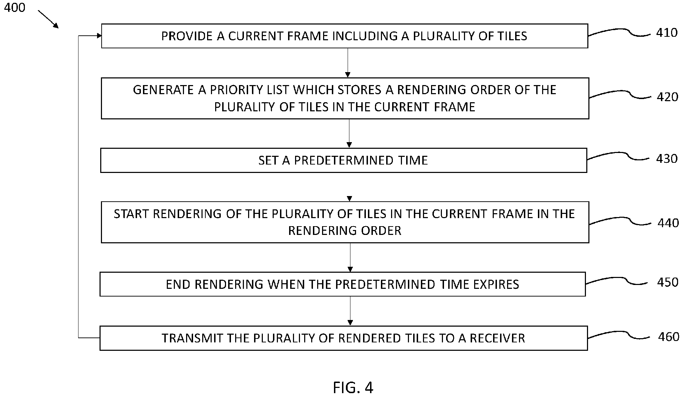

FIG. 4 illustrates an iterative computer-implemented method 400 for rendering a plurality of tiles in a rendering order, by a transmitter device 104, according to an embodiment of this disclosure.

At method step 410, a current frame, which is a single image or scene (comprising a plurality of virtual objects) of a video game, is constructed using multiple tiles. These tiles are arranged in a grid or pattern to create the complete scene. Other methods of splitting frames into tiles may be used, and the tiles may not be all the same e.g., a frame may be formed of non-contiguous parts. The tiles may be defined by priority, distance from camera, or other metric to determine importance. Each tile may comprise a plurality of pixels, each pixel having a pixel value that corresponds to the colour of said pixel. Pixel value refers to the numerical representation of the colour or intensity of a single point in a scene. Each pixel has a specific location within the scene and is assigned a pixel value that corresponds to its colour or greyscale intensity. In a greyscale scene, each pixel's value typically ranges from 0 to 255, with 0 representing black and 255 representing white. The values in between represent various shades of grey. In a colour scene, each pixel is typically represented as a combination of three colour channels: red, green, and blue (RGB). The pixel value for each channel usually ranges from 0 to 255, with 0 indicating the absence of that colour and 255 indicating the maximum intensity of that colour. For example, a bright red pixel would have a pixel value of (255,0,0).

At step 420, a priority list which stores a rendering order of the plurality of tiles in the current frame is generated. The priority list manages the order in which the plurality of tiles is rendered. The priority list is a data structure that stores items along with their associated priorities. The items comprise an ID number corresponding to each tile in the current frame. Each tile is assigned a priority value. The value indicating the rendering order. For example, higher values may indicate that the tile should be rendered before tiles with lower values. Alternatively, lower values may indicate that the tile should be rendered before tiles with higher values. Preferably, tiles with higher priorities are placed at the top of the priority list, and tiles with lower priorities are placed at the bottom of the priority list.

At step 430, a predetermined time is set. The predetermined time is set in a script, for example. The predetermined time represents the maximum time allowed for rendering the current frame, and therefore ensures the rendering process does not exceed the specified predetermined time. Preferably, the predetermined time is 8 milliseconds, 16 milliseconds, or 33 milliseconds. A shorter predetermined time decreases latency. The predetermined time may be set according to the use or system requirements. In some embodiments, the predetermined time is adjustable.

At step 440, rendering of the plurality of tiles in the current frame in the rendering order is started. When the predetermined time expires, at step 450, a plurality of rendered tiles 313 are produced. The plurality of rendered tiles is less than the plurality of tiles i.e., some or all the tiles specified in the priority list are rendered. At step 460, the plurality of rendered tiles 313 are transmitted to a receiver device 305. The plurality of rendered tiles 313 are transmitted to the receiver device 305 via the communication channel 314. In some embodiments, the plurality of rendered tiles 313 are compressed prior to transmission.

Process 400 is an iterative process. Each iteration provides the next frame. The previous frame (i.e., the frame from the previous iteration) refers to a frame that is provided immediately before the current frame, in a sequence of frames. The previous frame includes a plurality of tiles. Each tile in the previous frame corresponds to a respective tile in the current frame (i.e., the frame from the current iteration). Each tile in the previous frame may comprise a plurality of pixels, each pixel having a pixel value that corresponds to the colour of said pixel.

In some embodiments, a position of a tile in the rendering order is at least partially dependent on a change of the plurality of pixels in the tile in the previous compared to the corresponding tile in the current frame. For example, the tile having the most change of the plurality of pixels is placed at the top of the priority list. The "most change of the plurality of pixels" refers to identifying or measuring the extent to which the pixels in a tile in a current frame have changed from the corresponding tile in a previous frame. The extent of change may be calculated using various methods, such as the absolute difference in pixel values or colour difference.

In some embodiments, the rendering order is determined based, at least in part, on a saliency map comprising a most obvious area. The "most obvious area" in a saliency map refers to the region or regions with the highest saliency values (indicating the parts of the tile that are most visually different from their surroundings). To identify the "most obvious area" in a saliency map, a threshold is applied to the saliency map, designating regions with saliency values above the threshold as the most salient areas. Preferably, the threshold is adjustable, to control the level of saliency considered as "most obvious". In some embodiments, a position of a tile in the rendering order is at least partially dependent on the tile corresponding to the most obvious area (in the current frame). For example, the tile corresponding to the most obvious area is placed at the top of the priority list.

In some embodiments, the rendering order is determined based, at least in part, on a heat map comprising a hottest area. A heatmap uses colour intensity to represent the values of a data matrix in a graphical format. The "hottest area" in a heat map is identified as the region with the highest values or concentration of data points. This can be done through various methods known to the skilled person, including thresholding, or clustering or density estimation. In some embodiments, a position of a tile in the rendering order is at least partially dependent on the tile corresponding to the hottest area (in the current frame). For example, the tile corresponding to the hottest area is placed at the top of the priority list.

In some embodiments, when process 400 is iterated multiple times, a position of a tile in the rendering order is at least partially dependent on a time since the last tile was rendered. Preferably, a time period since the last tile was rendered is 1 second. In some embodiments, a threshold time is set, and if the time since the last tile was rendered exceeds the threshold, then the tile is placed at the top of the priority list. Preferably, the threshold is adjustable.

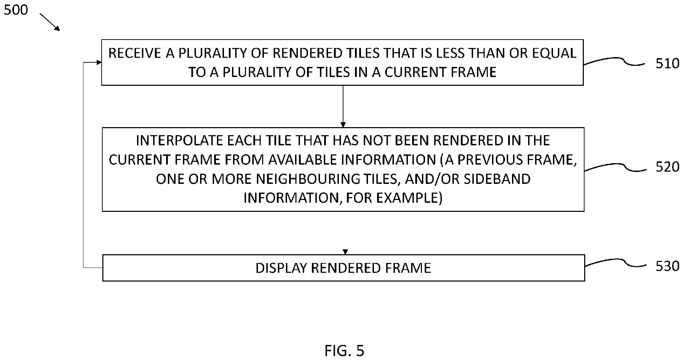

Figure 5 illustrates an iterative computer-implemented method 500 for interpolating each tile that has not been rendered, by a receiver device 105, from available information, according to an embodiment of this disclosure.

At step 510, the plurality of rendered tiles 113 (that is less than the plurality of tiles in the current frame) are received.

At step 520, each tile that has not been rendered in the current frame is interpolated from available information or data. For example, the available information may comprise a previous frame, one or more neighbouring tiles from the plurality of rendered tiles 113 and/or sideband information. In some embodiments, when the available information is sideband information, the sideband information comprises one or more motion vectors. Motion vectors provide information about how virtual objects or regions within a frame move from one frame to the next.

If the plurality of rendered tiles 113 were compressed prior to transmission, the plurality of rendered tiles 113 are decompressed at the receiver device 105. Systems and methods for decompressing the plurality of rendered tiles 113 are well known in the art and vary depending on the compression technique used. In some embodiments, the receiver device 105 is configured to determine which compression technique has been used, based on the received compressed plurality of rendered tiles 113, and reverses the compression using the corresponding decompression technique. In some embodiments, the video game is rendered at the receiver device 105. At step 530, a rendered frame is displayed on display 107.

## Claims

1. A computer-implemented method, comprising:
providing (410) a current frame including a plurality of tiles;
generating (420) a priority list, wherein the priority list stores a rendering order of the plurality of tiles in the current frame;
setting (430) a predetermined time, wherein, the predetermined time is a maximum time to be spent rendering the current frame;
starting (440) rendering of the plurality of tiles in the current frame in the rendering order and ending (450) rendering when the predetermined time expires, thereby producing a plurality of rendered tiles that is less than the plurality of tiles; and
transmitting (460) the plurality of rendered tiles to a receiver, wherein the plurality of rendered tiles is independently encoded prior to transmission to the receiver.

2. The computer-implemented method according to claim 1, further comprising:
providing a previous frame including a plurality of tiles, wherein a location of each tile in the previous frame corresponds to a location of a respective tile in the current frame.

3. The computer-implemented method according to claim 2, wherein:
each tile comprises a plurality of pixels, wherein each pixel has a pixel value within a range 0-255; and
a position of a tile in the rendering order is at least partially dependent on a change of the plurality of pixels in the tile compared to the previous frame.

4. The computer-implemented method according to any preceding claim, wherein:
the rendering order is determined based, at least in part, on a saliency map comprising a most obvious area, wherein the most obvious area comprises one or more regions with highest saliency values.

5. The computer-implemented method according to claim 4, wherein:
a position of a tile in the rendering order is at least partially dependent on the tile corresponding to the most obvious area.

6. The computer-implemented method according to any preceding claim, wherein the rendering order is determined based, at least in part, on a heatmap comprising a hottest area, wherein the hottest area comprises a region with the highest colour intensity values or concentration of data points.

7. The computer-implemented method according to claim 6, wherein a position of a tile in the rendering order is at least partially dependent on the tile corresponding to the hottest area.

8. The computer-implemented method according to any preceding claim, wherein a time period since a last tile was rendered is one second.

9. The computer-implemented method according to any of claims 1 to 7, wherein a position of a tile in the rendering order is at least partially dependent on a time since the tile was last rendered.

10. The computer-implemented method according to any preceding claim, wherein the predetermined time is 8 milliseconds, 16 milliseconds, or 33 milliseconds.

11. The computer-implemented method according to any of claims 1 to 9, wherein the predetermined time is adjustable.

12. A computer-implemented method, comprising:
receiving (510) a plurality of rendered tiles that is less than a plurality of tiles in a current frame produced according to the method of any preceding claim; and interpolating (520) each tile that has not been rendered in the current frame from available information, wherein the available information comprises a previous frame, one or more neighbouring tiles, and/or sideband information.

13. The computer-implemented method according to claim 12, wherein the available information comprises sideband information and the sideband information comprises one or more motion vectors that provide information about how virtual objects or regions within a frame move from one frame to the next.

14. A receiver device (105), comprising:
a processor;
a memory; and
wherein, the receiver device is configured to carry out the method of any of claims 12 to 13.

15. A transmitter device (104), comprising:
a network interface;
a processor;
a memory communicatively coupled to the processor, the memory comprising instructions operable, when executed by the processor, to cause the processor to carry out the method of any of claims 1 to 11.

## Patentansprüche

1. Computerimplementiertes Verfahren, umfassend:
Bereitstellen (410) eines aktuellen Frames, der eine Vielzahl von Kacheln einschließt;
Generieren (420) einer Prioritätsliste, wobei die Prioritätsliste eine Renderreihenfolge der Vielzahl von Kacheln in dem aktuellen Frame speichert;
Einstellen (430) einer vorbestimmten Zeit, wobei die vorbestimmte Zeit eine maximale Zeit ist, die für das Rendern des aktuellen Frames aufzuwenden ist;
Beginnen (440) des Renderns der Vielzahl von Kacheln in dem aktuellen Frame in der Renderreihenfolge und Beenden (450) des Renderns, wenn die vorbestimmte Zeit abläuft, wodurch eine Vielzahl von gerenderten Kacheln erzeugt wird, die geringer als die Vielzahl von Kacheln ist; und
Übertragen (460) der Vielzahl von gerenderten Kacheln an einen Empfänger, wobei die Vielzahl von gerenderten Kacheln vor einer Übertragung an den Empfänger unabhängig codiert wird.

2. Computerimplementiertes Verfahren nach Anspruch 1, ferner umfassend:
Bereitstellen eines vorherigen Frames, der eine Vielzahl von Kacheln einschließt, wobei ein Standort jeder Kachel in dem vorherigen Frame einem Standort einer jeweiligen Kachel in dem aktuellen Frame entspricht.

3. Computerimplementiertes Verfahren nach Anspruch 2, wobei:
jede Kachel eine Vielzahl von Pixeln umfasst, wobei jedes Pixel einen Pixelwert innerhalb eines Bereichs 0-255 aufweist; und
eine Position einer Kachel in der Renderreihenfolge mindestens teilweise von einer Änderung der Vielzahl von Pixeln in der Kachel verglichen mit dem vorherigen Frame abhängig ist.

4. Computerimplementiertes Verfahren nach einem der vorstehenden Ansprüche, wobei:
die Renderreihenfolge mindestens teilweise basierend auf einer Salienzkarte bestimmt wird, umfassend einen auffälligsten Bereich, wobei der auffälligste Bereich eine oder mehrere Regionen mit höchsten Salienzwerten umfasst.

5. Computerimplementiertes Verfahren nach Anspruch 4, wobei:
eine Position einer Kachel in der Renderreihenfolge mindestens teilweise von der Kachel abhängig ist, die dem offensichtlichsten Bereich entspricht.

6. Computerimplementiertes Verfahren nach einem der vorstehenden Ansprüche, wobei die Renderreihenfolge mindestens teilweise basierend auf einer Heatmap bestimmt wird, umfassend einen heißesten Bereich, wobei der heißeste Bereich eine Region mit den höchsten Farbintensitätswerten oder Konzentration von Datenpunkten umfasst.

7. Computerimplementiertes Verfahren nach Anspruch 6, wobei eine Position einer Kachel in der Renderreihenfolge mindestens teilweise von der Kachel abhängig ist, die dem heißesten Bereich entspricht.

8. Computerimplementiertes Verfahren nach einem der vorstehenden Ansprüche, wobei eine Zeitspanne, seit eine letzte Kachel gerendert wurde, eine Sekunde beträgt.

9. Computerimplementiertes Verfahren nach einem der Ansprüche 1 bis 7, wobei eine Position einer Kachel in der Renderreihenfolge mindestens teilweise von einer Zeit abhängig ist, seit die Kachel zuletzt gerendert wurde.

10. Computerimplementiertes Verfahren nach einem der vorstehenden Ansprüche, wobei die vorbestimmte Zeit 8 Millisekunden, 16 Millisekunden oder 33 Millisekunden beträgt.

11. Computerimplementiertes Verfahren nach einem der Ansprüche 1 bis 9, wobei die vorbestimmte Zeit einstellbar ist.

12. Computerimplementiertes Verfahren, umfassend:
Empfangen (510) einer Vielzahl von gerenderten Kacheln, die geringer als eine Vielzahl von Kacheln in einem aktuellen Frame ist, der gemäß dem Verfahren nach einem der vorstehenden Ansprüche erzeugt wird; und Interpolieren (520) jeder Kachel, die in dem aktuellen Frame nicht gerendert wurde, aus verfügbaren Informationen, wobei die verfügbaren Informationen einen vorherigen Frame, eine oder mehrere benachbarte Kacheln und/oder Seitenbandinformationen umfassen.

13. Computerimplementiertes Verfahren nach Anspruch 12, wobei die verfügbaren Informationen Seitenbandinformationen umfassen und die Seitenbandinformationen einen oder mehrere Bewegungsvektoren umfassen, die Informationen darüber bereitstellen, wie sich virtuelle Objekte oder Regionen innerhalb eines Frames von einem Frame zu dem nächsten bewegen.

14. Empfängervorrichtung (105), umfassend:
einen Prozessor;
einen Speicher; und
wobei die Empfängervorrichtung konfiguriert ist, um das Verfahren nach einem der Ansprüche 12 bis 13 auszuführen.

15. Übertragungsvorrichtung (104), umfassend:
eine Netzwerkschnittstelle;
einen Prozessor;
einen Speicher, der mit dem Prozessor kommunikativ gekoppelt ist, der Speicher umfassend Anweisungen, die betreibbar sind, wenn sie durch den Prozessor vorgenommen werden, um zu veranlassen, dass der Prozessor das Verfahren nach einem der Ansprüche 1 bis 11 ausführt.

## Revendications

1. Procédé mis en œuvre par ordinateur, comprenant :
la fourniture (410) d'une trame actuelle comportant une pluralité de tuiles ;
la génération (420) d'une liste de priorités, dans lequel la liste de priorités stocke un ordre de restitution de la pluralité de tuiles dans la trame actuelle ;
la définition (430) d'un temps prédéterminé, dans lequel le temps prédéterminé est un temps maximal à consacrer à la restitution de la trame actuelle ;
le début (440) de la restitution de la pluralité de tuiles dans la trame actuelle dans l'ordre de restitution et la fin (450) de la restitution à l'expiration du temps prédéterminé, produisant ainsi une pluralité de tuiles restituées qui est inférieure à la pluralité de tuiles ; et
la transmission (460) de la pluralité de tuiles restituées à un récepteur, dans lequel la pluralité de tuiles restituées est codée indépendamment avant la transmission au récepteur.

2. Procédé mis en œuvre par ordinateur selon la revendication 1, comprenant en outre :
la fourniture d'une trame précédente comportant une pluralité de tuiles, dans lequel un emplacement de chaque tuile dans la trame précédente correspond à un emplacement d'une tuile respective dans la trame actuelle.

3. Procédé mis en œuvre par ordinateur selon la revendication 2, dans lequel :
chaque tuile comprend une pluralité de pixels, dans lequel chaque pixel a une valeur de pixel comprise dans une plage allant de 0 à 255 ; et
une position d'une tuile dans l'ordre de restitution dépend au moins partiellement d'un changement de la pluralité de pixels dans la tuile par rapport à la trame précédente.

4. Procédé mis en œuvre par ordinateur selon l'une quelconque revendication précédente, dans lequel :
l'ordre de restitution est déterminé en fonction, au moins en partie, d'une carte de saillance comprenant une zone la plus évidente, dans lequel la zone la plus évidente comprend une ou plusieurs régions avec des valeurs de saillance les plus élevées.

5. Procédé mis en œuvre par ordinateur selon la revendication 4, dans lequel :
une position d'une tuile dans l'ordre de restitution dépend au moins partiellement de la tuile correspondant à la zone la plus évidente.

6. Procédé mis en œuvre par ordinateur selon l'une quelconque revendication précédente, dans lequel l'ordre de restitution est déterminé en fonction, au moins en partie, d'une carte de chaleur comprenant une zone la plus chaude, dans lequel la zone la plus chaude comprend une région avec les valeurs d'intensité de couleur ou la concentration de points de données les plus élevées.

7. Procédé mis en œuvre par ordinateur selon la revendication 6, dans lequel une position d'une tuile dans l'ordre de restitution dépend au moins partiellement de la tuile correspondant à la zone la plus chaude.

8. Procédé mis en œuvre par ordinateur selon l'une quelconque revendication précédente, dans lequel une période de temps depuis la restitution d'une dernière tuile est d'une seconde.

9. Procédé mis en œuvre par ordinateur selon l'une quelconque des revendications 1 à 7, dans lequel une position d'une tuile dans l'ordre de restitution dépend au moins partiellement d'un temps écoulé depuis la dernière restitution de la tuile.

10. Procédé mis en œuvre par ordinateur selon l'une quelconque revendication précédente, dans lequel le temps prédéterminé est de 8 millisecondes, 16 millisecondes, ou 33 millisecondes.

11. Procédé mis en œuvre par ordinateur selon l'une quelconque des revendications 1 à 9, dans lequel le temps prédéterminé est ajustable.

12. Procédé mis en œuvre par ordinateur, comprenant :
la réception (510) d'une pluralité de tuiles restituées qui est inférieure à une pluralité de tuiles dans une trame actuelle produite selon le procédé selon l'une quelconque revendication précédente ; et l'interpolation (520) de chaque tuile qui n'a pas été restituée dans la trame actuelle à partir d'informations disponibles, dans lequel les informations disponibles comprennent une trame précédente, une ou plusieurs tuiles voisines, et/ou des informations de bande latérale.

13. Procédé mis en œuvre par ordinateur selon la revendication 12, dans lequel les informations disponibles comprennent des informations de bande latérale et les informations de bande latérale comprennent un ou plusieurs vecteurs de mouvement qui fournissent des informations sur la façon dont des objets ou des régions virtuels dans une trame se déplacent d'une trame à l'autre.

14. Dispositif récepteur (105), comprenant :
un processeur ;
une mémoire ; et
dans lequel le dispositif récepteur est configuré pour mettre en œuvre le procédé selon l'une quelconque des revendications 12 à 13.

15. Dispositif transmetteur (104), comprenant :
une interface réseau ;
un processeur ;
une mémoire couplée de manière à communiquer au processeur, la mémoire comprenant des instructions exploitables, lorsqu'elles sont exécutées par le processeur, pour amener le processeur à mettre en œuvre le procédé selon l'une quelconque des revendications 1 à 11.
